(19) **Europäisches Patentamt**

**European Patent Office**

**Office européen des brevets**

(11) **EP 1 190 108 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(21) Anmeldenummer: **00918571.1**

(22) Anmeldetag: **20.04.2000**

(51) Int Cl.⁷: **C22C 37/04**, C22C 37/08, B21B 27/00, C21D 9/00

(86) Internationale Anmeldenummer:
**PCT/AT00/00102**

(87) Internationale Veröffentlichungsnummer:
**WO 00/065118 (02.11.2000 Gazette 2000/44)**

(54) **GUSSWERKSTOFF FÜR INDEFINITEWALZEN MIT EINEM MANTELTEIL UND VERFAHREN ZU DESSEN HERSTELLUNG**

CASTING MATERIAL FOR INDEFINITE ROLLERS WITH A SLEEVE PART AND METHOD FOR PRODUCING THE SAME

MATERIAU DE MOULAGE POUR CYLINDRE INDEFINI MUNI D'UNE PARTIE DE BANDAGE ET PROCEDE PERMETTANT DE LE PRODUIRE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.04.1999 AT 72099**

(43) Veröffentlichungstag der Anmeldung:
**27.03.2002 Patentblatt 2002/13**

(73) Patentinhaber: **Eisenwerk Sulzau-Werfen, R. & E. Weinberger AG**
**5451 Tenneck (AT)**

(72) Erfinder:
- **FEISTRITZER, Bernhard**
  **5451 Tenneck (AT)**
- **SCHRÖDER, Karl-Heinrich**
  **8922 St. Martin 167 (AT)**
- **WINDHAGER, Michael**
  **8933 St Gallen 163 (AT)**
- **ZIEHENBERGER, Karl-Heinz**
  **A-5451 Tenneck (AT)**

(74) Vertreter: **Wildhack, Helmut, Dipl.-Ing. Dr. Patentanwälte**
**Dipl.-Ing. Dr. Helmut Wildhack**
**Dipl.-Ing. Dr.Gerhard Jellinek**
**Landstrasser Hauptstrasse 50**
**1030 Wien (AT)**

(56) Entgegenhaltungen:
**EP-A- 0 525 932       EP-A- 0 665 068**
**EP-A- 0 760 398       US-A- 5 536 230**

- **PATENT ABSTRACTS OF JAPAN vol. 014, no. 063 (C-0685), 6. Februar 1990 (1990-02-06) & JP 01 287248 A (SUMITOMO METAL IND LTD), 17. November 1989 (1989-11-17)**
- **PATENT ABSTRACTS OF JAPAN vol. 1996, no. 08, 30. August 1996 (1996-08-30) & JP 08 109434 A (KUBOTA CORP), 30. April 1996 (1996-04-30)**

**Beschreibung**

Die Erfindung betrifft ein Verfahren zur Herstellung von legiertem Gußwerkstoff, insbesondere von Werkstoff für den Arbeitsbereich von Indefinitewalzen,das ist der Arbeitsbereich - oder Mantelteil von Verbund-Indefinitewalzen, enthaltend die Elemente Kohlenstoff, Silizium, Mangan, Chrom, Nickel, Molybdän, Vanadin, gegebenenfalls weitere Elemente der Gruppe 5 des Periodensystems, Aluminium, Rest Eisen und herstellungsbedingte Verunreinigungen.

Weiters bezieht sich die Erfindung auf einen Gußwerkstoff enthaltend die oben angeführten Elemente.

Die Erfindung umfaßt schließlich eine Verbund-Indefinitewalze, insbesondere für Arbeitswalzen zur Umformung von Flachstahl, bestehend aus einem Arbeits-oder Mantelteil, gebildet aus einer Gußlegierung mit geringer Haft- oder Schweißneigung für das Walzgut und einem zähfesten Kernteil aus niedrig legiertem Gußeisen, insbesondere aus Sphäroguß.

Werkzeuge oder Maschinenteile, die beim Gebrauch derselben einer Mehrzahl von Beanspruchungen unterschiedlicher Art ausgesetzt sind, erfordern ein besonderes Eigenschaftsprofil. Davon ausgehend sind im Hinblick auf die Machbarkeit und die wirtschaftliche Herstellung sowie die Lebensdauer im praktischen Betrieb der Teile die jeweils geeignetsten Werkstoffe und Herstellungsverfahren auszuwählen.

Teile, die bei variierenden Temperaturen über der Raumtemperatur, insbesondere für eine Warmformgebung von Werkstücken, eingesetzt werden, sind in vielen Anwendungsfällen aus Gußwerkstoffen gebildet. Durch eine derartige Werkstoffwahl können in günstiger Weise im wesentlichen ein Verzug wegen örtlich unterschiedlichen Temperaturen minimiert, die Herstellung der Teile wirtschaftlich gestaltet und die Materialeigenschaften den Beanspruchungen weitgehend angepaßt werden.

Arbeitswalzen zum Warmwalzen von Stahl, zum Beispiel Walzen in Warm-Breitbandstraßen, insbesondere in Steckelgerüsten und in den Fertiggerüsten, sind einerseits hohen mechanischen und thermischen Belastungen ausgesetzt und müssen andererseits eine möglichst geringe Neigung zum Kleben und Verschweißen mit dem Walzgut aufweisen. Je dünner nämlich das Warmband gewalzt wird, desto höher werden die spezifischen ;Flächenpressungen zwischen Arbeitswalze und Walzgut, was, begünstigt durch die tiefen Endwalztemperaturen den letzten Gerüsten, eine Tendenz zum Anhaften des Bandes an der Walzenoberfläche wesentlich verstärkt. Dieses Kleben, Verschweißen der Walzenoberfläche mit dem Band kann zum Herausreißen von Material aus dem Bande führen, was als solches und anhaftend auf der Walze zu weiteren Walzfehlern führen kann, was oft zwangsläufig zue Qualitätsabwertung des Warmbandes führt.

Es ist bekannt, zur Erfüllung der Erfordernisse betreffend eine Verringerung der Reibungen im Walzspalt und Verminderung der Haftneigung des Bandes an der Walzenoberfläche sowie zur Erhöhung des Widerstandes gegen Ausschalungen und Thermoschockschädigungen des Materials, im Arbeitsbereich der Walzen in den letzten Gerüsten einer Warmbandwalzstraße einen Indefinite-Gußwerkstoff einzusetzen.

Die Indefinite-Qualität besteht aus drei wesentlich verschiedenen Gefügebestandteilen, die aus dem Gußzustand heraus gebildet werden, nämlich aus Graphit, Karbiden und einer stahlähnlichen Matrix. Nur die Matrix kann durch eine Wärmebehandlung wesentlich verändert werden. Die Indefinite-Walzen-Qualität bzw. die Legierung bildet bei schneller Erstarrung viel Karbid und wenig Graphit im Gefüge und bei geringerer Erstarrungsgeschwindigkeit sind die Verhältnisse umgekehrt, d.h., daß weniger Karbid und mehr Graphit entsteht. Dies hat zur Folge, daß schnell erstarrtes Material härter und langsam erstarrtes Material weicher ist. Bei einer Indefinite-Walze wirkt sich das so aus, daß mit zunehmendem Abstand von der Gußoberfläche der Karbidanteil sinkt, der Graphitanteil zunimmt und die Härte ebenfalls geringer wird. Da in diesem Fall kein definierter Härtesprung zu beobachten ist, wurde diese Qualität "Indefinite" Graphitausscheidungen können jedoch die Härte und insbesondere die Verschleißeigenschaften des Werkstoffes verschlechtern, so daß zur Minimierung dieses Nachteiles die Mikrostruktur zusätzlich harte Karbide aufweisen soll.

Um den Graphitanteil und die Härte im Mantel einer Verbundwalze möglichst konstant zu halten, wird gemäß EP- 0 525 932 A1 vorgeschlagen, eine Gießtemperatur der Mantellegierung zwischen 20 °C unter 70 °C über der Ausscheidungstemperatur primärer Partikel einzustellen und mit einem derartigen Schmelzeneintrag in das Kokillenrohr zu gießen, daß die durchschnittliche Aufbaugeschwindigkeit des Mantels 2 bis 40 mm/min beträgt.

Dem Fachmann ist geläufig, durch legierungstechnische Maßnahmen ein Gußgefüge mit Graphitteilchen und Karbiden zu erstellen, wobei die Gehalte aus die Graphitbildung fördernden Elementen, im wesentlichen Nickel und Silizium, und die Konzentration der Karbidbildner, im wesentlichen Chrom und Molybdän in geringen Mengen, sowie die Kohlenstoffgehalte in der Schmelze aufeinander abzustimmen sowie deren Wechselwirkung bei der Erstarrung zu berücksichtigen sind.

Indefinitewalzen weisen gemäß dem Stand der Technik eine Zusammensetzung in Gew.-% von 2,6 bis 3,6 Kohlenstoff, 0,6 bis 1,1 Silizium, 0,6 bis 1,0 Mangan, 1,5 bis 2,1 Chrom, 4,1 bis 4,6 Nickel, 0,3 bis 0,5 Molybdän, Rest Eisen, Begleitelemente und Verunreinigungen auf. Das Gefüge des Arbeitskörpers bzw. des Mantels einer Verbundwalze besteht im wesentlichen aus einer bainitischen und/oder martensitischen Matrix mit Anteilen von 28 bis 40 % an eutektischen Karbiden und 1,3 bis 2,2 Vol.-% Graphit, wobei 5 bis 20 Graphitteilchen je $mm^2$ Schlifffläche vorliegen.

Um die Gebrauchseigenschaften von Indefinitewalzen zu verbessern, insbesondere deren Verschleißwiderstand im Arbeitsbereich zu erhöhen, wurde schon versucht ( PCT/GB 93/02380), in die dafür vorgesehene Schmelze vorzugsweise oberflächenbeschichtete Karbidteilchen höherer Härte einzubringen. Es ist dem Fachmann bekannt, daß hochharte Karbide geringen Anteils die Verschleißfestigkeit des Werkstoffes mehr erhöhen als die Erhöhung qualitätstypischer Karbide geringer Härte. Wird nun die Walze bzw. der Walzenmantel aus einer derartigen Schmelze mittels des Schleudergußverfahrens hergestellt, so können auf Grund des unterschiedlichen spezifischen Gewichtes WO 96/39 544 offenbart eine Indefinitewalze aus Gußeisen bestehend aus 2.5 - 4.0 C, 4.2 - 4.6 Ni, 0,3 - 0.5 Mo, 1.5 - 2.0 Cr, 0.7 - 1.2 Si, 0.7 - 1.0 Mn, <0.07 P, < 0.08 S, 0.3 - 6. Nb und Rest Fe, in der Karbide gleichmäßig verteilt sind, und die eine Shore C Härte von 76 bis 83 aufweist, 3 - 6% des kohlenstoffs besthet aus Graphit. zwischen Schmelze und Karbidteilchen und der Zentrifugalkraft unerwünschte Seigererscheinungen und Inhomogenitäten gebildet werden. Weiters kann durch die Veränderung der Schmelze die Ausbildung des notwendigen Graphits gestört werden.

Gemäß PCT/US 96/09181 erfolgte der Vorschlag, einer Schmelze mit einer ausgewogenen Zusammensetzung für Indefinitewalzen 0,3 bis 6,0 Gew.-% Niob zuzusetzen und den Kohlenstoffgehalt stöchiometrisch dem zu bildenden Niobkarbid entsprechend zu erhöhen. Durch diese Vorgangsweise werden zwar der Karbidanteil und der Verschleißwiderstand des Werkstoffes erhöht, höhere Niobgehalte können jedoch zu einer primären Bildung von Karbiden führen, was eine Vergröberung der Karbidkörner und der Graphitteilchen bewirken kann.

Bei einem Schleudergießen des Arbeitsbereiches einer Indefinitewalze ist die Legierung in der Kokille während der Erstarrung einer hohen Zentrifugalbeschleunigung, zum Beispiel im Bereich von 80 bis 180 G, ausgesetzt. Weil nun primär in der Schmelze gebildetet Monokarbide des Vanadins eine geringere Dichte und solche des Niobs eine höhere Dichte als die des Flüssigmetalles besitzen, kann es zu Seigererscheinungen bzw. Entmischungen kommen. Zur Verhinderung von derartigen Seigerungen wurde schon vorgeschlagen (US 5 738 734), die Schmelze gleichermaßen mit Vanadin und Niob derart zu legieren, daß die bei der Erstarrung entstehenden Monokarbide Mischkarbide (VNb)C sind und im wesentlichen die gleiche Dichte wie die Schmelze besitzen. Auf Grund der möglichst hohen Gehalte an den Monokarbid bildenden Elementen bis 17 Gew.-% gemäß obiger US-Patentschrift, muß auch die Kohlenstoffkonzentration gemäß dem bekannten Zusammenhang eingestellt sein. Eine derartige Legierung kann jedoch ein ungünstiges Erstarrungsgefüge mit örtlichen Entmischungen und großen Graphitpartikeln aufweisen, was einerseits schon nach geringen Einsatzzeiten eine verminderte Oberflächengüte der Walze erbringt und andererseits eine Klebeneigung des Walzgutes verstärkt,

Ausgehend vom Stand der Technik liegt der Erfindung die Aufgabe zugrunde, ein neues verbessertes Verfahren anzugeben, mittels welchen der Werkstoff des Arbeitsbereiches von Indefinitewalzen eine wesentlich geringere Neigung zu einem Kleben oder Anschweißen des Walzgutes aufweist und eine konstant hohe Abriebfestigkeit über die Dicke des genutzten Bereiches besitzt.

Weiter setzt sich die Erfindung zum Ziel,einen Gußwerkstoff zu schaffen, der fein dispers und homogen verteilte Graphitausscheidungen mit einem geringen Volumsanteil aufweist und ebenso gleichmäßig verteilt im Grundmaterial Sonderkarbide mit durchwegs kleinem Karbidkorndurchmesser besitzt sowie bei einem Abschliff im wesentlichen unveränderte Eigenschaften der Arbeitsoberfläche aufweist.

Schließlich bezweckt die Erfindung, Verbund-Indefinitewalzen zu erstellen, deren Gebrauchseigenschaften wesentlich verbessert sind und die Gefahr von Walzenbrüchen, Ausschalungen und Rißbildungen im Übergangsbereich zum Kern verringert ist.

Diese Aufgabe wird bei einem gemaß Anspruch 1 gelöst.

Die mit der Erfindung erzielten Vorteile bestehen im wesentlichen darin, daß die Erstarrungskinetik der Schmelze und die Gefügemorphologie des Werkstoffes vorteilhaft geändert eingestellt wurden. Diese Änderung wird durch die synergetische Wirkung der Legierungselemente in den angegebenen Konzentrationen erreicht, wobei eine hohe Anzahl von kleinen Graphitteilchen durch ein gegenüber dem Stand der Technik geringfügiges Anheben des Gehaltes von Silizium und gegebenenfalls Aluminium in Anwesenheit von Nickel in engen Grenzen ermöglicht ist. Dabei ist jedoch die Wirkungssumme der karbidbildenden Elemente bei der eutektischen Erstarrung wichtig, wobei Chrom und Molybdän in den vorgesehenen Konzentrationen als entscheidende Einflußgrößen gefunden wurden. Weil die Vanadinkarbide zumindest teilweise vor der eutektischen Erstarrung bis zur Löslichkeitsgrenze des Vanadins in der flüssigen Legierung ausgeschieden werden, ist es wichtig, daß diese Monokarbide eine geringe Korngröße aufweisen und derart in der Schmelze bei der Erstarrung nicht durch die wirkende Zentrifugalbeschleunigung seigern können. Nach derzeitigem Wissensstand wird die Feinkörnigkeit der primären dispersen Karbidausscheidung durch die Wechselwirkung von Kohlenstoff, Silizium sowie Nickel einerseits und Chrom, Molybdän sowie Vanadin andererseits erreicht. Diese Wechselwirkungen der Aktivitäten der Elemente sind wissenschaftlich noch nicht vollständig geklärt, es kann jedoch angenommen werden, daß bei der Erstarrung eine vorteilhafte Ausscheidungskinetik erreicht und bei entsprechenden Siliziumgehalten und Nickelkonzentrationen in der Restschmelze die Graphit-und die eutektische Karbidausscheidung verzögert werden und daß nach Erreichen einer größeren Unterkühlung eine feinkörnige Resterstarrung erfolgt. Die Zusammensetzung der Schmelze soll dabei derart eingestellt werden, daß der Graphitanteil im erstarrten Werkstoff 1,0 bis 3,0 Vol.-% beträgt. Geringere Graphitanteile erhöhen auch bei einer hohen Graphitteilchendichte je mm$^2$ von größer als 20 die Klebeneigung des Walzgutes an der Walzenoberfläche. Übersteigt der Graphitanteil 3,0 Vol.-%, vergrößert sich der Walzenverschleiß. Weiters ist legierungstechnisch ein Anteil von 8 bis 35 Vol.-% an eutektischen Karbiden und ein Gehalt von mindestens 1 Vol.-% Sonderkarbiden bzw. Monokarbiden zu erstellen. Geringere Karbidanteile als 8 und 1 Vol.-% führen zu niedrigerem Verschleißwiderstand des Materials und mehr als 35 Vol.-% eutektische Karbide erhöhen die Gefahr einer Rißbilding bzw. die Bruchgefahr.

Eine besonders ausgeprägte Brandrißbeständigkeit sowie Oberflächengüte bei geringem Verschleiß der Walze im Betrieb kann erreicht werden, wenn die Zusammensetzung der Schmelze legierungstechnisch derart eingestellt wird, daß bei Erstarrung eine Mikrostruktur gebildet wird, welche 1,2 bis 2,5 Vol.-%, vorzugsweise 1,25 bis 1,95 Vol.-%, Graphit mit der Maßgabe aufweist, daß mehr als 22, höchstens jedoch 90, Graphitteilchen je $mm^2$ Beobachtungsfläche eines Schliffes vorliegen und der Rest im wesentlichen aus Martensit, 10 bis 25 Vol.-% eutektischen Karbiden und 2 bis 20 feinverteilten Monokarbiden besteht.

Wenn gemäß einer bevorzugten Weiterbildung der Erfindung die Zusammensetzung der Schmelze derart eingestellt wird, daß in Anwesenheit von Nickel das Konzentrationsverhältnis von Kohlenstoff zu Silizium kleiner/gleich 2,6, vorzugsweise kleiner/gleich 2,0 beträgt, kann mit hoher Genauigkeit und in engen Grenzen die Graphitausscheidung bzw. der Graphitanteil des Werkstoffes im gewünschten Bereich erstellt werden. Bei einem den Wert von 2,6 übersteigenden Verhältnis der Kohlenstoff- zu den Siliziumgehalten werden sowohl grobe primäre Monokarbide gebildet als auch die Graphitbildung nachteilig beeinflußt.

Bei einer Optimierung der Materialeigenschaften und Werkstoffgüte ist von Vorteil, wenn der Kohlenstoffgehalt der Schmelze in Gew.-% auf einen Wert von 2,2 bis 3,1, vorzugsweise 2,6 bis 2,95, eingestellt wird.

Im Sinne einer besonderen Ausgewogenheit der Graphit-und Karbidverteilung bei der Erstarrung und zur weiteren Verbesserung der Gebrauchseigenschaften der Walze hat es sich als günstig erwiesen, wenn ein Endgehalt an Silizium in Gew.-% von mehr als 1,2 bis 1,95, vorzugsweise 1,4 bis 1,75, vorgesehen wird.

Das Element Aluminium fördert einerseits die Tendenz zur Graphitbildung, bewirkt jedoch andererseits auch eine Feinkornausscheidung von Sonderkarbiden. Aluminium kann also wirkungskinetisch teilweise das Silizium ersetzen und als Steuerelement für eine ausgewogene Graphit/Karbidausscheidung Anwendung finden, so daß bei der legierungstechnischen Einstellung der Zusammensetzung der Schmelze in Gew.-% Aluminium mit 0,002 bis 0,65 zugesetzt und in dieser gelöst werden kann. Bevorzugt sind Gehalte von 0,005 bis 0,04 Gew.-% an Aluminium.

Die Einstellung von hoher Werkstoffgüte in engen Grenzen ist günstig, wenn der Nickelgehalt der Schmelze in Gew.-% auf einen Wert von 3,51 bis 4,7, vorzugsweise 4,15 bis 4,6, eingestellt wird.

Erstarrungskinetisch,aber auch im Hinblick auf eine Ausbildung einer hohen Anzahl von Graphitteilchen hat es sich als vorteilhaft erwiesen, wenn das Konzentrationsverhältnis Molybdän zu Chrom kleiner als 1,0, vorzugsweise kleiner als 0,8, beträgt.

$$\frac{Mo}{Cr} < 1,0, \text{ vorzugsweise } < 0,8$$

Übersteigt der Verhältniswert 1,0, so können sich bei der Abkühlung und bei der Wärmebehandlung der Verbundwalze hohe Umwandlungsspannungen ausbilden, wodurch Materialtrennungen entstehen können. Diese Gefahr ist bei kleineren Walzen höher, der Sicherheit wegen betreffend eine Rißbilding ist es jedoch vorteilhaft, jedenfalls ein Verhältnis der Gehalte von Chrom zur Molybdän unter 0,8 vorzusehen.

Im Sinne einer gezielten Ausbildung von eutektischen Karbiden und damit einer Verringerung der Bruchgefahr des Walzenmaterials bei Stoßbelastungen hat es sich als vorteilhaft herausgestellt, wenn die Gehalte an Chrom und Molybdän der Schmelze in Gew.-% auf die Werte von
Chrom 1,2 bis 2,6, vorzugsweise 1,5 bis 2,01
Molybdän 0,20 bis 2,6, vorzugsweise 0,3 bis 0,9
eingestellt werden.

Mangan dient in erster Linie der Abbindung von Schwefel, wobei in günstiger Weise der Mangangehalt der Schmelze in Gew.-% auf einen Wert von 0,6 bis 1,6, vorzugsweise von 0,7 bis 1,45, eingestellt wird.

Um eine feindisperse Graphitteilchenverteilung weiters zu fördern und die Korngröße der Sonderkarbide gleichmäßig klein zu halten und damit die Gebrauchseigenschaften einer Indefinitewalze auch bei oftmaligem Abschliff zu verbessern, kann weiters von Vorteil sein, wenn der Schmelze in Gew.-% Vanadin 1,8 bis 3,9, vorzugsweise 1,9 bis 2,9, zugesetzt und in dieser gelöst wird.

Es kann auch von Vorteil sein, wenn Vanadin teilweise durch weitere Elemente von Ta und/oder Nb der Gruppe 5 des Periodensystems in einem Ausmaß von weniger als 0,6 Gew.-% substituiert und Mischkarbide gebildet werden. Letztendlich werden die vorgesehenen Eigenschaften des Werkstoffes durch eine Wärmebehandlung erbracht. Im Zuge des erfindungsgemäßen Verfahrens hat es sich als vorteilhaft gezeigt, wenn der Gußkörper bzw. die Walze einer Wärmebehandlung unterworfen wird, welche aus mindestens einem Aufwärmen von Raumtemperatur auf eine Behandlungstemperatur von 400°C bis 500°C, vorzugsweise von 460°C bis 480°C, einem Halten bei dieser Temperatur von mindestens zwei Stunden, vorzugsweise mindestens acht Stunden, und einem Abkühlen auf Raumtemperatur, gegebenenfalls mit einer Tieftemperaturbehandlung, besteht.

Das weitere Ziel der Erfindung wird bei einem Gußwerkstoff gemäß Anspruch 11 erreicht.

Der Vorteil des derart gebildeten Werkstoffes stellt dessen besondere Eignung für eine Erstellung von Indefinitewalzen dar und ist im wesentlichen darin zu sehen, daß im Vergleich mit dem Stand der Technik ein sehr konstanter Graphitanteil mit einem dergleichen Eigenschaftsprofil des Materiales erzielt wird. Durch die legierungstechnisch bewirkte hohe Graphitteilchendichte wird dabei die Schweiß-oder Anhaftneigung des Walzgutes an der Walzenoberfläche wesentlich vermindert. Eine Teilchenzahl unter 20 je mm$^2$ Beobachtungsfläche zeigt jedoch keine ausreichende Wirkung. Gleiches gilt, wenn die Anzahl der Graphitteilchen über 100 je mm$^2$ liegt, weil dann der Durchmesser der Einzelteilchen zu gering ist, um die Anhaftneigung im erforderlichen Maße zu verringern. Für eine hohe Graphitteilchenzahl und eine feine eutektische Erstarrung mit kleinen Sonderkarbiden ist es erforderlich, daß der Vanadingehalt größer als 0,5 Gew.-% ist, weil kleinere Konzentrationen keine wirkungsvolle Gefügeverfeinerung bewirken., Für die feindisperse Graphitteilchenbildung sowie den Erhalt einer gewünschten Erstarrungs-und Gefügestruktur des Werkstoffes sind bei einem geforderten Kohlenstoffgehalt auch die Elemente Silizium in Anwesenheit von Nickel sowie Chrom und Molybdän in jeweils engen Konzentrationsgrenzen vorzusehen, weil diese Elemente kinetisch in Wechselwirkung stehen. Allerdings führen hohe Vanadingehalte zu groben primären Karbidausscheidungen vom Typ MC und können eine erhöhte Bruchgefahr und ein Ausbrechen der großen Karbide können eine erhöhte Bruchgefahr und ein Ausbrechen der großen Karbide aus der Arbeitsfläche bewirken, so daß die Konzentration dieses Elementes im Werkstoff den Wert von 5,9 Gew.-% nicht überschreiten soll.

Die Gebrauchseigenschaften der Walze können in vorteilhafter Weise weiter gesteigert werden, wenn die Legierung

1,8 bis 4,9 Gew.-% Vanadin

2,2 bis 3,1 Kohlenstoff mit der Maßgabe, daß

1,2 bis 2,5 Vol.-% Graphit in Teilchen mit einer Verteilung von mehr als 22 Teilchen, höchstens jedoch 90 Teilchen, je mm$^2$ einer metallographischen Schlifffläche enthält. Wird bei einem Graphitgehalt von 1,8 Vol.-% die Graphitteilchenzahl von 100 je mm$^2$ Bildfläche überschritten, so erhöht sich die Haftneigung des Walzgutes an der Walzenoberfläche wesentlich.

Hohe Gütesicherung insbesondere im Hinblick auf das Umwandlungsverhalten des Werkstoffes wird erreicht, wenn die Legierung in Gew.-%

2,0 bis 3,5 Kohlenstoff

1,0 bis 2,0 Silizium

0,5 bis 2,0 Mangan

1,0 bis 3,0 Chrom

3,5 bis 4,9 Nickel

0,2 bis 2,9 Molybdän

1,5 bis 4,9 Vanadin

Rest Eisen und Verunreinigungen

enthält, wie beansprucht.

Weiters ist, wie sich zeigte, bei der erfindungsgemäßen Ausbildung der Werkstoffzusammensetzung im Hinblick auf eine homogene und feindisperse Graphitteilchenbildung sowie auf verbesserte Gebrauchseigenschaften eine Indefinitewalze von Vorteil, wenn die Legierung ein Konzentrationsverhältnis von Kohlenstoff zu Silizium von kleiner/gleich 2,6, vorzugsweise von kleiner/gleich 2,0, aufweist, wobei eine Anwesenheit von Nickel vorgesehen ist.

Sowohl für eine besonders feine Graphit-und Karbidausbildung als auch für eine ausgewogene eutektische Graphit/Karbidausscheidung hat sich als vorteilhaft herausgestellt, wenn die Legierung in Gew.-% Silizium größer als 1,2 bis 1,85, vorzugsweise von 1,4 bis 1,75, enthält.

Aluminium kann in Gehalten von 0,002 bis 0,65 Gew.-%, vorzugsweise von 0,005 bis 0,04 Gew.-%, in günstiger Weise eine gewünschte Graphit- sowie Karbidausbildung und eine feine Erstarrungsstruktur des Gußkörpers sicherstellen.

Bevorzugt enthält, im Hinblick auf einen kontrollierten Graphitgehalt und auf eine vorgesehene Härteannahme des Werkstoffes, die Legierung in Gew.-% Nickel 3.5 bis 4,9, vorzugsweise 4,15 bis 4,6.

Zur Abbindung des Schwefels kann in günstiger Weise die Legierung Mangan in Gew.-% von 0,6 bis 1,6, vorzugsweise 0,7 bis 1,4, enthalten.

Sowohl die Erstarrungsmorphologie als auch das Umwandlungsverhalten des Mantelwerkstoffes können verbessert und die Rißgefahr der Verbundwalze gesenkt werden, wenn die Legierung ein Konzentrationsverhältnis von Molybdän zu Chrom von kleiner 1,0, vorzugsweise kleiner 0,8, aufweist. Dadurch werden die inneren Spannungen einer Walze entscheidend verringert. Dies gilt für Vanadingehalte bis 5,9 Gew.-% und nur geringen Gehalten an weiteren Elementen der Gruppe 5 des Periodensystems. Durch Gehalte in Gew.-% von 1,5 bis 2,01 an Chrom und Konzentrationen von 0,3 bis 0,9 an Molybdän, insbesonderen bei einem Kohlenstoffgehalt von 2,6 bis 2,95 Gew.-% kann der Anteil an eutektischen Karbiden im Walzenwerkstoff vorteilhaft ausgebildet sein.

Wenn die Legierung in Gew.-% Vanadin 1,8 bis 4,0, vorzugsweise 1,9 bis 2,95, enthält, werden gleichzeitig günstige Verschleißwiderstände bei hohen Materialhärten und ein verbessertes Gefügeumwandlungsverhalten des Werkstoffes erreicht.

Es kann auch der Gehalt an Vanadin teilweise durch einen Gehalt an den weiteren monokarbidbildenden Elementen von Nb und/oder Ta der Gruppe 5 des Periodensystems in einem Ausmaß von weniger als 0,6 Gew.-% substituiert sein. Bei Konzentrationen von 0,6 Gew.-% und höher an Niob oder Tantal in der Legierung können grobe Phasen im Gefüge gebildet sein, welche die Eigenschaften der Arbeitswalze und die Oberflächenqualität des Walzgutes verschlechtern.

Schließlich sind eine hohe Bruchfestigkeit und eine geringe Neigung zu Ausschalungen bei verbessertem Verschleißverhalten des Gußwerkstoffes zu erreichen, wenn dieser in Vol.-%

8 bis 35, vorzugsweise 10 bis 25, eutektisches Karbid und

1 bis 15, vorzugsweise 2 bis 10, Karbide der Elemente der Gruppe 5, der Vanadingruppe, des Periodensystems besitzt.

Mit dem Schleudergußverfahren hergestellte Verbund- Indefinitewalzen mit wesentlich verbesserten Gebrauchseigenschaften und geringer Gefahr von Walzenbrüchen, Ausschalungen, Brandrißbildungen und Rißbifdungen im Übergangsbereich zum Kern anzugeben, wird erreicht, daß der Arbeitsbereich oder Mantel eine Dicke von 10 bis 150 mm aufweist und der Mantelwerkstoff ein Gefüge bestehend im wesentlichen aus 1,0 bis 2,5 Vol.-% Graphit, wobei dieser feindispers mit einer Graphitteilchenzahl von mehr als 20 Teilchen je mm$^2$ einer metallographischen Schlifffläche vorliegt, aus 8 bis 35 Vol.-% eutektischen Karbiden, aus 1 bis 20 Vol.-% Vanadinkarbiden in gleichmäßiger Verteilung, insbesondere in Richtung der Manteldicke, Rest im wesentlichen Martensit und verunreinigungs-oder herstellungsbedingt vorliegenden Bestandteilen, besteht und eine Härte zwischen 70 und 90 ShC hat.

Dieser Zweck wird durch die Verbund-Indefinitewalze gemäß Anspruch 17 gelöst.

Der Vorteil der erfindungsgemäßen Walzen ist im wesentlichen darin zu sehen, daß der mit dem Kern hoher Festigkeit metallisch verbundene Mantel eine hohe Graphitteilchenzahl aufweist, welche besonders wirksam ein Anhaften bzw. Anschweißen des Walzgutes im Walzbetrieb verhindert. Diese homogene Graphitausbildung sowie die gleichmäßige Verteilung der kleinen Vanadin-Sonderkarbide wird durch eine legierungstechnische Beeinflussung der Erstarrungskinetik erreicht, so daß Entmischungen durch eine sogenannte Zentrifugalseigerung während des Schleudergießverfahrens nicht auftreten können. Somit ist in vorteilhafter Weise auch bei erforderlichen radialen Abtragungen die Gefügeausbildung und die Walzleistung nach jedem Nacharbeiten der Arbeitsoberfläche weitgehend gleich. Die jeweilige Walzleistung bis zu einem erforderlichen Nacharbeiten der Oberfläche ist vorteilhaft erhöht, weil die hohe Graphitteilchendichte eine gesteigerte Brandrißbeständigkeit sowie eine verbesserte Oberflächengüte des durch die Sonderkarbide vermehrt verschleißfesten Mantels bewirkt.

Ein erhöhtes Eigenschaftsniveau einer erfindungsgemäßen Walze kann sicher erreicht werden, wenn der Arbeitsbereich oder Mantelwerkstoff ein Gefüge besitzt, welches 1,0 bis 2,5 Vol.-% Graphit mit der Maßgabe enthält, daß dessen Verteilungsdichte mindestens 22 Teilchen, höchstens jedoch 100 Teilchen, je mm$^2$ metallographischer Schlifffläche beträgt, eutektische Karbide in einem Ausmaß von 10 bis 25 Vol.-% enthält und 2 bis 10 Vol.-% Sonderkarbide der Elemnte der Gruppe 5 des Periodensystems besitzt.

Wenn gemäß einer bevorzugten Werkstoffvariante der Arbeits-oder Mantelwerkstoff eine Zusammensetzung in Gew.-% von

C = 2,0 bis 3,5, vorzugsweise 2,21 bis 3,1, insbesondere 2,6 bis 2,95

Si = 1,0 bis 2,0, vorzugsweise größer 1,2 bis 1,85, insbesondere 1,4 bis 1,75

Mn = 0,5 bis 2,0, vorzugsweise 0,6 bis 1,6, insbesondere 0,7 bis 1,4

Cr = 1,0 bis 3,0, vorzugsweise 1,3 bis 2,5, insbesondere 1,5 bis 2,01

Ni = 3,5 bis 4,9, vorzugsweise 3,5 bis 4,7, insbesondere 4,15 bis 4,6

Mo = 0,2 bis 2,9, vorzugsweise 0,25 bis 1,3, insbesondere 0,3 bis 0,9

Al = 0,002bis 0,65, vorzugsweiswe 0,005 bis 0,1, insbesondere 0,005 bis 0,04

V = 0,5 bis 5,9, vorzugsweise 1,8 bis 3,9, insbesondere 1,9 bis 2,9

gegebenenfalls Nb und/oder Ta geringer als 0,6

Rest Eisen und Verunreinigungen

besitzt und der Walzenkern aus Sphäroguß gebildet ist, sind einerseits eine hohe Verschleißfestigkeit, eine verringerte Gefahr einer Rißbildung und einer Rißfortpflanzung und eine hohe Härte des Arbeitsbereiches der Walze gegeben.

Hohe Sicherheit gegen Rißinitiation ist erreichbar, wenn die Bindezone zwischen dem Mantel oder Arbeitsteil und dem Walzenkern aus niedrig legiertem Gußeisen, vorzugsweise aus Sphäroguß, in radialer Richtung eine Biegefestigkeit ( 3-Punkt-Biegeprobe) von größer als 600 N/mm$^2$ aufweist.

Anhand von Diagrammen und von Bildern von Erprobungsergebnissen sowie einer Tabelle sei die Erfindung näher erläutert.

Es zeigen

    Fig. 1 ein Diagramm C/Si

Fig. 2 ein Diagramm Mo/Cr
Fig. 3 und Fig. 4 Schliffbilder ungeätzt

Tab. 1 Walzenwerkstoffe und deren Leistung im praktischen Einsatz

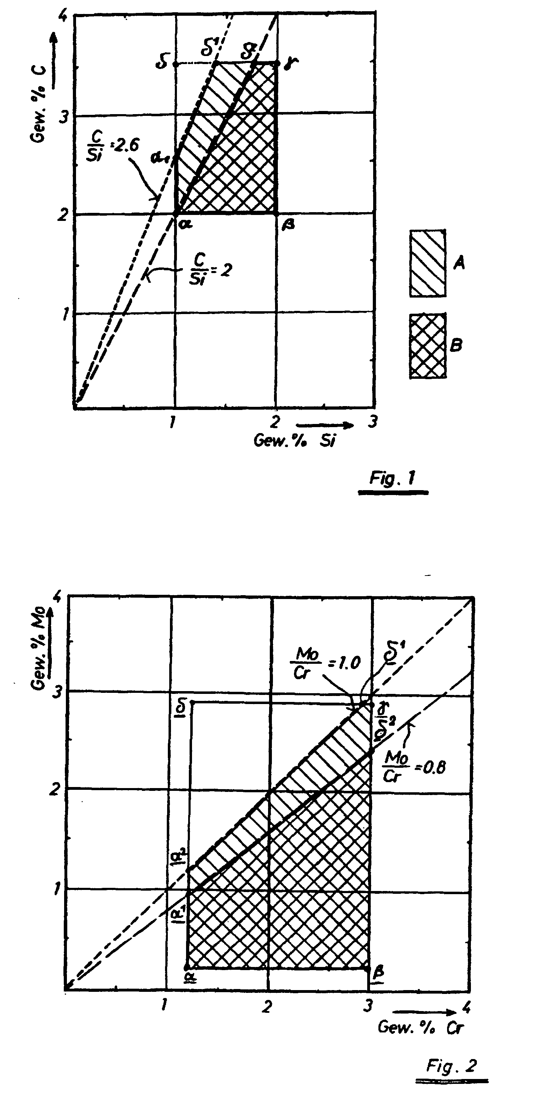

In Fig. 1 ist die Konzentration von Silizium und Kohlenstoff dargestellt, wobei der erfindungsgemäße Bereich durch die Punkte α, β, γ, δ beschrieben ist. Bevorzugte Bereiche mit einem Verhältnis $\frac{C}{Si}$ = 2,6 ( Bereich A) ( α, β, γ, δ$^1$, α$^1$ ) und einem

$$\frac{C}{Si} \text{ Verhältnis} \leqq 2,0 \text{ ( Bereich B) ( α, β, γ, δ}^2 \text{ )}$$

sind gekennzeichnet.

Fig. 2 zeigt ein Diagramm Molybdän und Chrom, in welchem der erfindungsgemäße Verhältnisbereich ( α̲, β̲, γ̲, δ̲ ) der Gehalte dargestellt ist. Die bevorzugten Bereiche mit einem Verhältnis

$$\frac{Mo}{Cr} \leqq 1,0 \text{ ( Bereich A) ( α̲, β̲, γ̲, δ̲}^1 \text{, α̲}^2 \text{ )}$$

und einem solchen von

$$\frac{Mo}{Cr} = 0,8 \text{ ( Bereich B) ( α̲, β̲, δ̲}^2 \text{, α̲}^1 \text{ )}$$

sind wie in Fig. 1 kenntlich gemacht

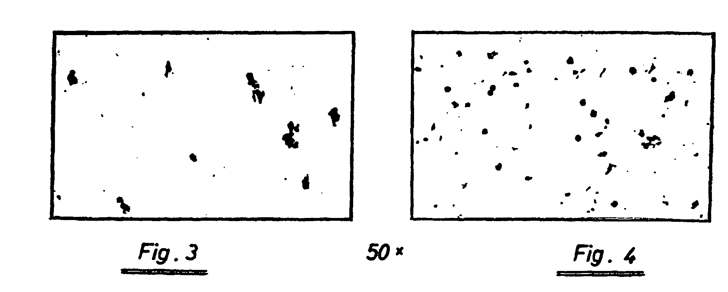

Fig. 3 zeigt in einem Schliffbild mit einer 50fachen Vergrößerung die Graphitausbildung in einem Walzenwerkstoff gemäß dem Stand der Technik. Der Walzenmantel wies folgende chemische Zusammensetzung in Gew.-% auf: C = 3,09, Si = 0,91, Mn = 0,84, Cr = 1,79, Ni = 4,51, Mo = 0,38, Al = 0,003, Graphitanteil: 3,9 Vol.-%, 18 Graphitteilchen je mm$^2$.

Fig. 4 zeigt in einem, eine gleiche Vergrößerung von 50fach aufweisenden Schliffbild die hohe Anzahl und gleichmäßige Verteilung der Graphitteilchen in einem erfindungsgemäß zusammengesetzten Arbeitsbereich einer Walze. Die chemische Zusammensetzung des Arbeitsbereiches war in Gew.-%

C = 3,02, Si = 1,42, Mn = 0,9, Cr = 1,8, Ni = 4,36, Mo = 0,52, V = 2,9, Al =,008, Graphitanteile : 2,8 Vol.-%, 42 Graphitteilchen je mm$^2$.

Im Vergleich mit einem Werkstoff nach dem Stand der Technik war trotz niedrigeren Kohlenstoffgehaltes und niedrigeren Graphitanteiles der erfindungsgemäßen Gußwerkstoff deren Graphitteilchenzahl mehr als doppelt so hoch und es wurden 3,2 Vol.-% Vanadinkarbide gemessen.

In der Tabelle 1 sind jeweils die chemische Zusammensetzung des Walzenmantels, die Gefügeausbildung und die im praktischen Einsatz erzielte Walzleistung von 10 Walzenpaaren zusammengestellt. Die Walzen mit der Bezeichnung A bis E, welche aus der Erzeugung gemäß dem Stand der Technik stammten, waren also nicht mit Vanadin legiert, die Walzen mit der Bezeichnung F bis J wurden mit einem erfindungsgemäß legierten Mantelwerkstoff gefertigt.

Durch ein Zulegieren von Vanadin ( Walzen F bis N) konnten bei verkleinertem Anteil an eutektischen Karbiden harte Vanadinkarbide mit geringer Korngröße und weitgehend homogener Verteilung im Werkstoff gebildet werden, wodurch sich die Verschleißfestigkeit des Materials und letztlich die Walzleistung wesentlich erhöhten. Eine hohe Graphitteilchenzahl je mm$^2$, welche durch die Wechselwirkungen der Aktivitäten der Elemente Cr, Si, Ni,Mo, C und V erreicht wurden, verhinderte auch bei geringen Graphitanteilen ein Kleben oder Verschweißen des Walzgutes an- bzw. mit der Walzenoberfläche. Ein Zusatz von Niob und Tantal, also von weiteren Elementen der Gruppe 5 des Periodensystems, erbrachte bei Gehalten kleiner 0,6 Gew.-% eine geringe Steigerung der Abriebfestigkeit bzw. der Walzleistung im Betrieb. Es ist bemerkenswert, daß sich die Rißbildung und der Rißfortschritt sowie die Ausschalungen im erfindungsgemäßen Mantelmaterial wesentlich verringerten, was wahrscheinlich auf die hohe Zahl von Graphitteilchen zurückgeführt werden kann. Eine Mikroerprobung hat gezeigt, daß die Monokarbide MC geringe Korngröße aufwiesen und weitgehend fein dispers verteilt angeordnet waren. Weil nun einerseits die Dichte der Vanadinkarbide ca. 5,82g/cm$^3$ bei RT beträgt, andererseits keinerlei Zentrifugalseigerungen verursacht durch den Schleuderguß bemerkbar waren, ist der Schluß zulässig, daß die Sonderkarbidausscheidung und die feine Graphitausscheidung im wesentlichen während der eutektischen Erstarrung erfolgten bzw. eine Primärausscheidung weitgehend unterbunden war.

EP 1 190 108 B1

| Bez. | Zusammensetzung des Mantels | | | | | | | | | | | Gefügeausbildung | | | | | | Walzenleistung |
|------|------|------|------|------|------|------|------|------|------|------|------|------|------|------|------|------|------|------|
| | C | Si | Mn | Cr | Ni | Mo | V | Nb+Ta | Al | C/Si | Mo/Cr | Karbide ges. | Karbide eutektisch | Karbide d. 5.Gruppe | Graphit-anteil | Graphit-teilchen | Härte | |
| | Gew% | Gew% | Gew% | Gew% | Gew% | Gew% | Gew% | Gew% | Gew% | | | Vol% | Vol% | Vol% | Vol% | je mm² | ShC | t/mm |
| A | 3,34 | 0,81 | 0,94 | 1,74 | 4,31 | 0,38 | - | - | 0,002 | 4,12 | 0,22 | 33,2 | 33,2 | 0 | 3,2 | 46 | 75-78 | 3.183 |
| B | 3,27 | 0,84 | 1,04 | 1,73 | 4,3 | 0,38 | - | - | 0,002 | 3,89 | 0,22 | 35,1 | 35,1 | 0 | 2,6 | 19 | 76-80 | 3.868 |
| C | 3,11 | 0,91 | 0,84 | 1,79 | 4,51 | 0,38 | - | - | 0,003 | 3,42 | 0,21 | 31 | 31 | 0 | 2,8 | 21 | 77-79 | 2.417 |
| D | 3,09 | 0,91 | 0,81 | 1,71 | 4,52 | 0,38 | - | - | 0,004 | 3,40 | 0,22 | 28,7 | 28,7 | 0 | 3,9 | 18 | 77-78 | 2.915 |
| E | 3,32 | 1,02 | 0,78 | 1,75 | 4,4 | 0,4 | - | - | 0,002 | 3,25 | 0,23 | 29,5 | 29,5 | 0 | 5,3 | 62 | 77-79 | 1.736 |
| F | 2,75 | 1,42 | 0,9 | 1,8 | 4,36 | 0,85 | 2,9 | - | 0,008 | 1,94 | 0,47 | 27,3 | 24,1 | 3,2 | 1,7 | 42 | 76-80 | 6.253 |
| G | 2,83 | 1,45 | 0,89 | 1,79 | 4,37 | 0,82 | 2,8 | - | 0,008 | 1,95 | 0,46 | 25,8 | 22,9 | 2,9 | 1,9 | 38 | 76-79 | 6.253 |
| H | 3,05 | 1,43 | 0,92 | 1,82 | 4,45 | 1,2 | 2,83 | - | 0,011 | 2,13 | 0,66 | 26 | 22,7 | 3,3 | 2,8 | 37 | 76-79 | 5.434 |
| I | 2,9 | 1,65 | 0,93 | 1,93 | 4,27 | 0,85 | 3,35 | 0,52 | 0,006 | 1,76 | 0,44 | 21,3 | 14 | 7,3 | 1,8 | 24 | 80-83 | 3.503 *) |
| J | 2,93 | 1,71 | 0,95 | 1,85 | 4,28 | 0,35 | 2,75 | 0,35 | 0,012 | 1,71 | 0,19 | 18,7 | 12,7 | 6 | 1,7 | 33 | 76-79 | 6.867 |
| K | 2,9 | 1,52 | 0,92 | 1,62 | 4,32 | 1,53 | 3,24 | - | 0,009 | 1,91 | 0,94 | 21,4 | 17,2 | 4,2 | 2,3 | 40 | 76-79 | 6.407 |
| L | 2,83 | 1,59 | 1,02 | 1,87 | 4,2 | 0,85 | 2,85 | - | 0,015 | 1,78 | 0,45 | 21,4 | 18,2 | 3,2 | 1,8 | 27 | 77-80 | 6.684 |
| M | 2,91 | 1,6 | 0,85 | 1,94 | 4,15 | 1,42 | 3,25 | 0,27 | 0,017 | 1,82 | 0,73 | 21,6 | 16,5 | 5,1 | 1,8 | 27 | 76-78 | 6.173 |
| N | 2,87 | 1,53 | 0,97 | 1,72 | 4,27 | 1,53 | 3,14 | 0,45 | 0,021 | 1,88 | 0,89 | 25,7 | 20,4 | 5,3 | 1,9 | 53 | 80-83 | 6.290 |

*) besonders erschwerte Walzbedingungen

F, G, H, I, J, K, L, M, N: Erfindungsgemäße Walzen

*Tab . 1*

**Patentansprüche**

1. Verfahren zur Herstellung und Verarbeitung von legiertem Gußwerkstoff für den Arbeitsbereich von Indefinitewalzen, enthaltend die Elemente Kohlenstoff, Silizium, Mangan, Chrom, Nickel, Molybdän, Vanadin, gegebenenfalls weitere Elemente der Gruppe 5 des Periodensystems, Aluminium, Rest Eisen, Begleitelemente und herstellungsbedingte Verunreinigungen, wobei

   A. eine Schmelze mit einer chemischen Zusammensetzung von in Gew.-%

   | 2,0 | bis 3,5 C | Kohlenstoff |
   |-----|-----------|-------------|
   | 1,0 | bis 2,0 Si | Silizium |
   | 0,5 | bis 2,0 Mn | Mangan |
   | 1,0 | bis 3,0 Cr | Chrom |
   | 3,5 | bis 4,9 Ni | Nickel |
   | 0,20 | bis 2,9 Mo | Molybdän |
   | wahlweise 0,002 | bis 0,65 Al | |

   Rest Eisen und Verunreinigungen erstellt und

   B. mehr als 0,5 Gew.-% Vanadin in einem Ausmaß bis 5,9 Gew.-%, wobei der Gehalt an Vanadin teilweise durch einen Gehalt an weiteren Elementen der Gruppe 5 des Periodensystems, das sind Niob und Tantal, in einem Ausmaß von weniger als 0,6 Gew.-% substituiert sein kann, zugesetzt, in dieser gelöst und

   C. die Zusammensetzung der Schmelze legierungstechnisch durch Festlegung der Konzentrationen von Kohlenstoff sowie Silizium in Anwesenheit von Nickel und der Wirkungssumme der karbidbildenden Elemente derart eingestellt wird, daß bei deren Erstarrung eine Mikrostruktur gebildet wird, welche 1,0 bis 3,0 Vol.-% Graphit mit der Maßgabe aufweist, daß mehr als 20, jedoch weniger als 100 Graphitteilchen je mm$^2$ Beobachtungsfläche eines metallographischen Schliffes vorliegen und der Rest im wesentlichen aus Martensit, 8 bis 35 Vol.-% eutektischen Karbiden und mindestens 1 Vol.-% feinverteilten Vanadinkarbiden besteht, wonach

   D. die Schmelze in eine Form, vorzugsweise in eine Schleudergußkokille, gegossen und zu einem Körper, vorzugsweise einem Arbeitskörper einer Walze, erstarren gelassen und gegebenenfalls der Gußkörper zum Beispiel zu einer Verbundwalze weitergebildet wird, welcher derart erstellte Körper bzw. welche Walze

   E. einer Wärmebehandlung, bestehend aus einem mindestens einmaligen Aufwärmen auf Behandlungstemperatur, einem Halten bei dieser Temperatur und einem Abkühlen auf Raumtemperatur unterworfen wird.

2. Verfahren nach Anspruch 1, wobei die Zusammensetzung der Schmelze legierungstechnisch durch Festlegung der Konzentrationen von Kohlenstoff sowie Silizium in Anwesenheit von Nickel und die Wirkungssumme der karbidbildenden Elemente derart eingestellt wird, daß bei der Erstarrung eine Mikrostruktur gebildet wird, welche 1,2 bis 2,5 Vol.-%, vorzugsweise 1,25 bis 1,95 Vol.-%, Graphit mit der Maßgabe aufweist, daß mehr als 22, höchstens jedoch 100, Graphitteilchen je mm$^2$ Beobachtungsfläche eines metallographischen Schliffes vorliegen und der Rest im wesentlichen aus Martensit, 10 bis 25 Vol.-% eutektischen Karbiden und 2 bis 20% feinverteilten Karbiden der Elemente der Gruppe 5 des Periodensystems, das sind Vanadin, Niob und Tantal. besteht.

3. Verfahren nach Anspruch 1 oder 2, wobei die Zusammensetzung der Schmelze derart eingestellt wird, daß das Konzentrationsverhältnis von Kohlenstoff zu Silizium kleiner/gleich 2,6, vorzugsweise kleiner/gleich 2,0, beträgt

4. Verfahren nach einem der Ansprüche 1 bis 3, wobei der Kohlenstoffgehalt der Schmelze in Gew.-% auf einen Wert von 2,2 bis 3,1, vorzugsweise von 2,6 bis 2,95, eingestellt wird und/oder daß ein Endgehalt von Silizium in Gew.-% von 1,2 bis 1,85, vorzugsweise 1,4 bis 1,75, vorgesehen wird.

5. Verfahren nach einem der Ansprüche 1 bis 4, wobei bei der legierungstechnischen Einstellung der Zusammensetzung der Schmelze in Gew.-% Aluminium 0,005 bis 0,04, zugesetzt und in dieser gelöst wird.

6. Verfahren nach einem der Ansprüche 1 bis 5, wobei der Nickelgehalt der Schmelze in Gew.-% auf einen Wert von 3,51 bis 4,7, vorzugsweise von 4,15 bis 4,6, eingestellt wird.

7. Verfahren nach einem der Ansprüche 1 bis 6, wobei die Zusammensetzung der Schmelze derart eingestellt wird, daß das Konzentrationsverhältnis Molybdän zu Chrom kleiner als 1,0, vorzugsweise kleiner als 0,8, beträgt und/oder

daß die Gehalte an Chrom und Molybdän der Schmelze in Gew.-% auf die Werte von

| Chrom | 1,5 bis 1,9 |
|---|---|
| Molybdän | 0,3 bis 0,9 |

eingestellt werden.

8. Verfahren nach einem der Ansprüche 1 bis 7, wobei der Schmelze in Gew.-% Vanadin 1,8 bis 3,9, vorzugsweise 1,9 bis 2,9, zugesetzt und in dieser gelöst wird.

9. Verfahren nach einem der Ansprüche 1 bis 8, wobei Vanadin teilweise durch Elemente der Gruppe 5 des Periodensystems, das sind Niob und Tantal, in einem Ausmaß von weniger als 0,6 Gew.-% substituiert und Mischkarbide gebildet werden.

10. Verfahren nach einem der Ansprüche 1 bis 9, wobei der Gußkörper bzw. die Walze einer Wärmebehandlung unterworfen wird, welche aus einem Aufwärmen von Raumtemperatur auf eine Behandlungstemperatur von 400°C bis 500°C, vorzugsweise 460°C bis 480°C, einem Halten bei dieser Temperatur von mindestens zwei Stunden, vorzugsweise mindestens acht Stunden, und einem Abkühlen auf Raumtemperatur, gegebenenfalls mit einer Tieftemperaturbehandlung, besteht.

11. Gußwerkstoff für den Arbeitsbereich von Indefinitewalzen das ist der Arbeits-oder Mantelteil von Indefinite-Verbundwalze, enthaltend die Elemente Kohlenstoff, Silizium, Mangan, Chrom, Nickel, Molybdän, wahlweise Aluminium, Vanadin, gegebenenfalls teilweise ersetzt durch Niob und/oder Tantal, Rest Eisen, Begleitelemente und herstellungsbedingte Verunreinigungen, wobei die Legierung in Gew.- % mehr als
0,5 bis 5,9 Vanadin, wobei weniger als 0,6 Gew.-% Vanadin durch die Elemtent Nb, Ta substituiert sein kann

| 1,0 bis 2,0 | Silizium |
|---|---|
| 0,5 bis 2,0 | Mangan |
| 1,0 bis 3,0 | Chrom |
| 3,5 bis 4,9 | Nickel |
| 0,20 bis 2,9 | Molybdän |

wahlweise 0,002 bis 0,65 Aluminium
2,0 bis 3,5 Kohlenstoff mit der Maßgabe, daß die Konzentrationen von Kohlenstoff sowie Silizium in Anwesenheit von Nickel und der Wirkungssumme der karbidbildenden Elemente derart eingestellt ist, daß eine Mikrostruktur im wärmebehandelten Zustand mit
1,0 bis 3,0 Vol.-% als Graphit in Teilchen mit einer Verteilung von mehr als 20, jedoch weniger als 100 Teilchen je mm2 Schlifffläche des Werkstoffes 8 bis 35 Vol.-% eutektische Karbide, mindestens 1 Vol.-% feinverteiltes Vanadin karbide, Rest im wesentlichen Martensit vorliegt.

12. Gußwerkstoff nach Anspruch 11, wobei die Legierung
1,8 bis 4,9 Gew.-% Vanadin
2,2 bis 3,1 Gew.-% Kohlenstoff mit der Maßgabe enthält, daß eine Mikrostruktur im wärmebehandelten Zustand mit
1,2 bis 2,5 Vol.-% Graphit in Teilchen mit einer Verteilung von mehr als 22, höchstens jedoch 90 Teilchen, je mm2 Schlifffläche des Werkstoffes
10 bis 25 Vol.-% eutektische Karbide
2 bis 20 Vol.-% feinverteilte Vanadin oder Vanadin-Mischkarbide
Rest im wesentlichen Martensit vorliegt.

13. Gußwerkstoff nach Anspruch 11 oder 12, wobei die Legierung in Gew.-%

| 2,0 bis 3,5 | Kohlenstoff |
|---|---|
| 1,0 bis 2,0 | Silizium |
| 0,5 bis 2,0 | Mangan |
| 1,2 bis 2,5 | Chrom |

(fortgesetzt)

| | |
|---|---|
| 3,5 bis 4,9 | Nickel |
| 0,5 bis 2,1 | Molybdän |
| 1,5 bis 4,9 | Vanadin |

Rest Eisen und Verunreinigungen
enthält.

**14.** Gußwerkstoff nach einem der Ansprüche 11 bis 13, wobei die Legierung ein Konzentrationsverhältnis von Kohlenstoff zu Silizium kleiner/gleich 2,6, vorzugsweise kleiner/gleich 2,0, aufweist und/oder
daß die Legierung in Gew.-%
Kohlenstoff 2,6 bis 2,95 enthält und/oder
daß die Legierung in Gew.-% Silizium 1,2 bis 1,85, vorzugsweise 1,4 bis 1,75, enthält und/oder
daß die Legierung in Gew.-% Aluminium 0,005 bis 0,04, enthält und/oder
daß die Legierung in Gew.-% Nickel 3,5 bis 4,9, vorzugsweise 4,15 bis 4,6, enthält.

**15.** Gußwerkstoff nach einem der Ansprüche 11 bis 14, wobei die Legierung ein Konzentrationsverhältnis von Molybdän zu Chrom von kleiner als 1,0, vorzugsweise kleiner 0,8, aufweist und/oder
daß die Legierung in Gew.-%

| | |
|---|---|
| Chrom | 1,5 bis 2,01 |
| Molybdän | 0,3 bis 0,9 |

enthält und/oder
daß die Legierung in Gew.-% Vanadin 1,8 bis 3,9, vorzugsweise 1,9 bis 2,95, enthält.

**16.** Gußwerkstoff nach einem der Ansprüche 11 bis 15, wobei der Werkstoff in Vol.-%
8 bis 35 eutektische Karbide und
1 bis 15 Karbide der Elemente der Gruppe 5 des Periodensystems und zwar Vanadin und Tantal, Rest im wesentlichen Martensit besitzt und/oder
daß der Werkstoff in Vol.-% 10 bis 25 eutektische Karbide und
2 bis 10 Karbide der Elemente der Gruppe 5 des Periodensystems, Rest im wesentlichen Martensit, besitzt.

**17.** Verbund-Indefinitewalze, insbesondere für Fertiggerüste von Breitbandstraßen sowie Steckel- und Grobblechanlagen, vorzugsweise hergestellt nach einem Verfahren gemäß den Ansprüchen 1 bis 10, bestehend aus einem Arbeits-oder Mantelteil aus einer Gußlegierung, vorzugsweise gemäß den Ansprüchen 11 bis 16, mit geringer Haft-oder Schweißneigung für das Walzgut und einem zähfesten Kemteil aus Sphäroguß, wobei der Arbeitsbereich oder Mantel eine Dicke von 10 bis 150 mm aufweist und der Mantelwerkstoff ein Gefüge bestehend im wesentlichen aus 1,0 bis 2,5 Vol.-% Graphit, wobei dieser feindispers mit einer Graphitteilchenzahl von mehr als 20 Teilchen je mm2 metallographischer Schliffläche vorliegt, aus 8 bis 35 Vol.-% eutektischen Karbiden, aus 1 bis 20 Vol.-% Vanadinkarbid in gleichmäßiger Verteilung, Rest im wesentlichen Martensit und verunreinigungs-oder herstellungsbedingt vorliegenden Bestandteilen, besteht und eine Härte zwischen 70 und 90 ShC hat.

**18.** Verbund-Indefinitewalze nach Anspruch 17, wobei der Arbeitsbereich oder Mantelwerkstoff ein Gefüge besitzt, welches 1,0 bis 2,5 Vol.-% Graphit mit der Maßgabe enthält, daß dessen Verteilungsdichte mindestens 22 Teilchen, höchstens jedoch 100 Teilchen, je mm2 metallographischer Schliffläche beträgt, eutektische Karbide in einem Ausmaß von 10 bis 25 Vol.-% enthält und 2 bis 10 Vol.-% Sonderkarbide der Elemente der Gruppe 5 des Periodensystems besitzt.

**19.** Verbund-Indefinitewalze nach Anspruch 17 oder 18, wobei der Arbeits-oder Mantelwerkstoff eine Zusammensetzung in Gew.-% von

C     = 2,0 bis 3,5
Si    = 1,0 bis 2,0
Mn    = 0,5 bis 2,0
Cr    = 1,0 bis 3,0

Ni = 3,5 bis 4,9
Mo = 0,20 bis 2,9
Al = 0,002 bis 0,65
V = 0,5 bis 5,9, wobei weniger als 0,6 Gew.-% durch Niob oder Tantal ersetzt sein kann

Rest Eisen und Verunreinigungen besitzt und der Walzenkem aus Sphäroguß gebildet ist oder
dass der Arbeits- oder Mantelwerkstoff eine Zusammensetzung aufweist, bei welcher ein Element oder mehrere
Elemente die Konzentration in Gew.-%

C = 2.21 bis 3,1 oder 2,6 bis 2,95
Si = größer 1,2 bis 1,85 oder 1,4 bis 1,75
Mn = 0,6 bis 1,6 oder 0,7 bis 1,4
Cr = 1,5 bis 2,01
Ni = 3,5 bis 4,7 oder 4,15 bis 4,6
Mo = 0,3 bis 0,9
Al = 0,005 bis 0,1 oder 0,005 bis 0,04
V = 1,8 bis 3,9 oder 1,9 bis 2,9

Rest Eisen und Verunreinigungen besitzt/besitzen und der Walzenkern aus Sphäroguß gebildet ist.

**20.** Verbund-Indefinitewalze nach einem der Ansprüche 17 bis 19, wobei der Arbeits- oder Mantelwerkstoff in Gew.-%

V = 3,1 bis 3,9, vorzugsweise 3,3 bis 3,75,
Nb+Ta = weniger als 0,6

Rest Eisen und Verunreinigungen besitzt.

**21.** Verbund-Indefinitewalze nach einem der Ansprüche 17 bis 20, wobei die Bindezone zwischen dem Mantel oder Arbeitsteil und dem Walzenkern aus niedrig legiertem Gußeisen oder aus Sphäroguß in radialer Richtung eine Biegefestigkeit (3-Punkt.Biegeprobe) von größer als 600 N/mm2 aufweist.


### Claims

**1.** A method for producing and processing alloyed casting material for the working region of indefinite rollers, containing the elements carbon, silicon, manganese, chromium, nickel, molybdenum, vanadium, optionally other elements of Group 5 of the Periodic System, aluminium, the residue iron, accompanying elements and impurities inherent in the production, wherein

A. a melt is produced, having a chemical composition of, in percent by weight,

| | | |
|---|---|---|
| 2.0 | to 3.5 C | carbon |
| 1.0 | to 2.0 Si | silicon |
| 0.5 | to 2.0 Mn | manganese |
| 1.0 | to 3.0 Cr | chromium |
| 3.5 | to 4.9 Ni | nickel |
| 0.20 | to 2.9 Mo | molybdenum |
| alternatively 0.002 | to 0.65 Al | |

the residue iron and impurities, and
B. more than 0.5 percent by weight of vanadium is added in an amount up to 5.9 percent by weight, wherein the vanadium content may be partially substituted by a content of other elements of Group 5 of the Periodic System, that is niobium and tantalum, in an amount less than 0.6 percent by weight, and is dissolved therein, and
C. the composition of the melt is adjusted in accordance with alloying technology by defining the concentrations of carbon and also silicon in the presence of nickel and the effective sum of the carbide-forming elements in such a way that, upon the solidification thereof, a microstructure is formed which has 1.0 to 3.0 percent by volume of graphite, provided that more than 20, but fewer than 100, graphite particles are present for each $mm^2$ of the studied area of a metallographic section and the residue consists substantially of martensite, 8 to 35 percent by volume of eutectic carbides and at least 1 percent by volume of finely distributed vanadium carbides, after which

D. the melt is poured into a mould, preferably a centrifugal casting ingot mould, and allowed to solidify into a body, preferably a working body of a roller, and optionally the cast body is further developed into a composite roller, for example, which body produced in this way or which roller

E. is subjected to a heat treatment consisting of heating up at least once to treatment temperature, holding at this temperature and cooling down to room temperature.

2. A method according to Claim 1, wherein the composition of the melt is adjusted in accordance with alloying technology by defining the concentrations of carbon and also silicon in the presence of nickel and the effective sum of the carbide-forming elements in such a way that, upon solidification, a microstructure is formed which has 1.2 to 2.5 percent by volume, preferably 1.25 to 1.95 percent by volume, of graphite, provided that more than 22, but a maximum of 100, graphite particles are present for each $mm^2$ of the studied area of a metallographic section and the residue consists substantially of martensite, 10 to 25 percent by volume of eutectic carbides and 2 to 20 % of finely distributed carbides of the elements of Group 5 of the Periodic System, that is vanadium, niobium and tantalum.

3. A method according to Claim 1 or 2, wherein the composition of the melt is adjusted in such a way that the concentration ratio of carbon to silicon is less than/equal to 2.6, preferably less than/equal to 2.0.

4. A method according to one of Claims 1 to 3, wherein the carbon content of the melt in percent by weight is adjusted to a value of 2.2 to 3.1, preferably 2.6 to 2.95, and/or in that a final silicon content in percent by weight of 1.2 to 1.85, preferably 1.4 to 1.75, is provided.

5. A method according to one of Claims 1 to 4, wherein, in the adjustment of the composition of the melt in accordance with alloying technology, in percent by weight, 0.005 to 0.04 of aluminium is added and dissolved therein.

6. A method according to one of Claims 1 to 5, wherein the nickel content of the melt in percent by weight is adjusted to a value of 3.51 to 4.7, preferably 4.15 to 4.6.

7. A method according to one of Claims 1 to 6, wherein the composition of the melt is adjusted in such a way that the concentration ratio of molybdenum to chromium is less than 1.0, preferably less than 0.8, and/or in that the chromium and molybdenum contents of the melt in percent by weight are adjusted to the values of

| chromium | 1.5 to 1.9 |
|---|---|
| molybdenum | 0.3 to 0.9. |

8. A method according to one of Claims 1 to 7, wherein in percent by weight 1.8 to 3.9, preferably 1.9 to 2.9, of vanadium is added to the melt and dissolved therein.

9. A method according to one of Claims 1 to 8, wherein vanadium is partially substituted by elements of Group 5 of the Periodic System, that is niobium and tantalum, in an amount less than 0.6 percent by weight and mixed carbides are formed.

10. A method according to one of Claims 1 to 9, wherein the cast body or the roller is subjected to a heat treatment which consists of heating up from room temperature to a treatment temperature of 400°C to 500°C, preferably 460°C to 480°C, holding at this temperature for at least two hours, preferably at least eight hours, and cooling down to room temperature, optionally with a low-temperature treatment.

11. A casting material for the working region of indefinite rollers, that is the working or shell part of indefinite composite rollers, containing the elements carbon, silicon, manganese, chromium, nickel, molybdenum, alternatively aluminium, vanadium, optionally partially replaced with niobium and/or tantalum, the residue iron, accompanying elements and impurities inherent in the production, wherein the alloy [contains][1], in percent by weight, more than 0.5 to 5.9

---

[1] The verb has been omitted in the source text; 'enthält' (contains) is assumed by the translator.

vanadium, wherein less than 0.6 percent by weight of vanadium may be substituted by the element Nb, Ta

| 1.0 to 2.0 | silicon |
|---|---|
| 0.5 to 2.0 | manganese |
| 1.0 to 3.0 | chromium |
| 3.5 to 4.9 | nickel |
| 0.20 to 2.9 | molybdenum |

alternatively 0.002 to 0.65 aluminium

2.0 to 3.5 carbon, provided that the concentrations of carbon and also silicon in the presence of nickel and the effective sum of the carbide-forming elements [are][2] adjusted in such a way that a microstructure in the heat-treated state is present, comprising

1.0 to 3.0 percent by volume as graphite in particles with a distribution of more than 20, but fewer than 100 particles for each $mm^2$ of a ground surface of the material,

8 to 35 percent by volume of eutectic carbides, at least 1 percent by volume of finely distributed vanadium carbides, the residue substantially martensite.

**12.** A casting material according to Claim 11, wherein the alloy contains

1.8 to 4.9 percent by weight of vanadium

2.2 to 3.1 percent by weight of carbon, provided that a microstructure in the heat-treated state is present, comprising

1.2 to 2.5 percent by volume of graphite in particles with a distribution of more than 22, but a maximum of 90 particles, for each $mm^2$ of a ground surface of the material

10 to 25 percent by volume of eutectic carbides

2 to 20 percent by volume of finely distributed vanadium or mixed vanadium carbides, the residue substantially martensite.

**13.** A casting material according to Claim 11 or 12, wherein the alloy contains, in percent by weight,

| 2.0 to 3.5 | carbon |
|---|---|
| 1.0 to 2.0 | silicon |
| 0.5 to 2.0 | manganese |
| 1.2 to 2.5 | chromium |
| 3.5 to 4.9 | nickel |
| 0.5 to 2.1 | molybdenum |
| 1.5 to 4.9 | vanadium |

the residue iron and impurities.

**14.** A casting material according to one of Claims 11 to 13, wherein the alloy has a concentration ratio of carbon to silicon of less than/equal to 2.6, preferably less than/equal to 2.0, and/or

in that the alloy contains, in percent by weight,

2.6 to 2.95 of carbon and/or

in that the alloy contains, in percent by weight, 1.2 to 1.85, preferably 1.4 to 1.75, of silicon, and/or

in that the alloy contains, in percent by weight, 0.005 to 0.04 of aluminium, and/or

in that the alloy contains, in percent by weight, 3.5 to 4.9, preferably 4.15 to 4.6, of nickel.

**15.** A casting material according to one of Claims 11 to 14, wherein the alloy has a concentration ratio of molybdenum to chromium of less than 1.0, preferably less than 0.8, and/or

in that the alloy contains, in percent by weight,

| chromium | 1.5 to 2.01 |
|---|---|
| molybdenum | 0.3 to 0.9 |

and/or

in that the alloy contains, in percent by weight, 1.8 to 3.9, preferably 1.9 to 2.95, of vanadium.

[2] 'is' in the source text.

**16.** A casting material according to one of Claims 11 to 15, wherein the material has, in percent by volume,
8 to 35 of eutectic carbides, and
1 to 15 of carbides of the elements of group 5 of the periodic system, that is vanadium and tantalum, the residue substantially martensite, and/or
in that the material has, in percent by volume, 10 to 25 of eutectic carbides and 2 to 10 of carbides of the elements of Group 5 of the Periodic System, the residue substantially martensite.

**17.** A composite indefinite roller, more particularly for finishing stands of broad strip trains and also Steckel and heavy plate installations, preferably produced in accordance with a method according to Claims 1 to 10, consisting of a working or shell part made of a casting alloy, preferably according to Claims 11 to 16, with a low susceptibility to adhere or weld to the material being rolled, and a toughened core part made of spheroidal-graphite cast iron, wherein the working region or shell has a thickness of 10 to 150 mm and the shell material a structure consisting substantially of 1.0 to 2.5 percent by volume of graphite, wherein the said graphite is present finely dispersed with a graphite particle count of more than 20 particles for each $mm^2$ of a metallographic ground surface, consists of 8 to 35 percent by volume of eutectic carbides, 1 to 20 percent by volume of vanadium carbide in uniform distribution, the residue substantially martensite and constituents present as a consequence of impurities or of the production, and has a hardness between 70 and 90 ShC.

**18.** A composite indefinite roller according to Claim 17, wherein the working region or shell material has a structure which contains 1.0 to 2.5 percent by volume of graphite, provided that the distribution density thereof is at least 22 particles, but a maximum of 100 particles, for each $mm^2$ of a metallographic ground surface, contains eutectic carbides in an amount of 10 to 25 percent by volume and 2 to 10 percent by volume of special carbides of the elements of Group 5 of the Periodic System.

**19.** A composite indefinite roller according to Claim 17 or 18, wherein the working or shell material has a composition, in percent by weight, of

C = 2.0 to 3.5
Si = 1.0 to 2.0
Mn = 0.5 to 2.0
Cr = 1.0 to 3.0
Ni = 3.5 to 4.9
Mo = 0.20 to 2.9
Al = 0.002 to 0.65
V = 0.5 to 5.9, wherein less than 0.6 percent by weight may be replaced with niobium or tantalum

the residue iron and impurities, and the roller core is formed from spheroidal-graphite cast iron or
in that the working or shell material has a composition in which one element or several elements has/have the concentration, in percent by weight,

C = 2.21 to 3.1 or 2.6 to 2.95
Si = greater than 1.2 to 1.85 or 1.4 to 1.75
Mn = 0.6 to 1.6 or 0.7 to 1.4
Cr = 1.5 to 2.01
Ni = 3.5 to 4.7 or 4.15 to 4.6
Mo = 0.3 to 0.9
Al = 0.005 to 0.1 or 0.005 to 0.04
V = 1.8 to 3.9 or 1.9 to 2.9

the residue iron and impurities, and the roller core is formed from spheroidal-graphite cast iron.

**20.** A composite indefinite roller according to one of Claims 17 to 19, wherein the working or shell material has, in percent by weight,

| V | = 3.1 to 3.9, preferably 3.3 to 3.75, |
|---|---|
| Nb+Ta | = less than 0.6 |

the residue iron and impurities.

21. A composite indefinite roller according to one of Claims 17 to 20, wherein the bond zone between the shell or working part and the roller core made of low alloy cast iron or spheroidal-graphite cast iron has a bending strength (3-point bending test) in the radial direction of more than 600 N/mm$^2$.


**Revendications**

1. Procédé pour la fabrication et le traitement d'une pièce coulée alliée pour la partie de travail de cylindres indéfinis, contenant les éléments suivants : carbone, silicium, manganèse, chrome, nickel, molybdène, vanadium, éventuellement d'autres éléments du groupe 5 de la classification périodique, aluminium, le reste étant constitué de fer, d'éléments d'accompagnement et d'impuretés résultant de l'élaboration, selon lequel

   A. on élabore une matière fondue présentant une composition chimique avec les pourcentages en poids suivants

   | | |
   |---|---|
   | 2,0 jusqu'à 3,5 C | Carbone |
   | 1,0 jusqu'à 2,0 Si | Silicium |
   | 0,5 jusqu'à 2,0 Mn | Manganèse |
   | 1,0 jusqu'à 3,0 Cr | Chrome |
   | 3,5 jusqu'à 4,9 Ni | Nickel |
   | 0,20 jusqu'à 2,9 Mo | Molybdène |
   | en option 0.002 jusqu'à 0.65 Al | |

   le reste étant composé de fer et d'impuretés et
   B. plus de 0,5 % en poids de vanadium pouvant être ajouté dans une proportion allant jusqu'à 5,9 % en poids, la teneur en vanadium pouvant être substituée partiellement par une teneur en d'autres éléments du groupe simple de la classification périodique, à savoir du niobium et du tantale, dans une proportion inférieure à 0,6 % en poids, étant dissous dans cette solution et
   C. la composition de la matière fondue est réglée par ajout d'éléments d'alliage par l'établissement de concentrations de carbone et de silicium en présence de nickel et de la somme efficace des éléments formant des carbures de telle sorte que, lors de sa solidification, on forme une microstructure qui présente 1,0 jusqu'à 3,0 % en volume de graphite à la condition que plus de 20, mais moins de 100 particules de graphite sont présentes par mm$^2$ de surface d'observation d'une coupe métallographique et que le reste est constitué principalement de martensite, de 8 jusqu'à 35 % en volume de carbures eutectiques et d'au moins 1 % en volume de carbures de vanadium finement répartis, après quoi
   D. la masse fondue est coulée dans un moule et de préférence dans une lingotière de centrifugation et est solidifiée pour former un corps, de préférence un corps de travail d'un cylindre et éventuellement le corps de coulée est transformé par exemple en un cylindre composite, lequel corps ou lequel cylindre ainsi élaboré
   E. est soumis à un traitement thermique comprenant un réchauffement au moins unique à la température de traitement, un maintien à cette température et un refroidissement jusqu'à la température ambiante.

2. Procédé selon la revendication 1, selon lequel la composition de la matière fondue est réglée par ajout d'éléments d'alliage par l'établissement des concentrations de carbone et de silicium en présence de nickel et de la somme efficace des éléments formant des carbures de telle sorte que, lors de la solidification, on forme une microstructure qui présente 1,2 jusqu'à 2,5 % en volume, de préférence 1,25 jusqu'à 1,95 % en volume de graphite à la condition que plus de 22, mais au maximum 100 particules de graphite soient présentes par mm$^2$ de surface d'observation d'une coupe métallographique et que le reste soit constitué essentiellement de martensite, de 10 à 25 % en volume de carbures eutectiques et de 2 à 20 % de carbures finement répartis des éléments du groupe 5 de la classification périodique, à savoir de vanadium, de niobium et de tantale.

3. Procédé selon la revendication 1 ou 2, selon lequel la composition de la masse fondue est réglée de telle sorte que le rapport de concentration entre le carbone et le silicium est inférieur ou égal à 2,6, de préférence inférieur ou égal à 2,0.

4. Procédé selon l'une quelconque des revendications 1 à 3, selon lequel la teneur en carbone de la matière fondue en pourcentage en poids est réglée sur la valeur de 2,2 jusqu'à 3,1, de préférence 2,6 jusqu'à 2,95 et/ou une teneur finale en silicium en pourcentage en poids de 1,2 jusqu'à 1,85, de préférence 1,4 jusqu'à 1,75 est prévue.

5. Procédé selon l'une quelconque des revendications 1 à 4, selon lequel de 0,005 jusqu'à 0,04 % en poids d'aluminium est ajouté lors de l'ajustage par addition d'éléments d'alliage de la composition de la matière fondue et est dissous dans cette matière.

6. Procédé selon l'une quelconque des revendications 1 à 5, selon lequel la teneur en nickel de la matière fondue en pourcentage en poids est réglée sur une valeur de 3,51 jusqu'à 4,7, de préférence de 4,15 jusqu'à 4,6.

7. Procédé selon l'une quelconque des revendications 1 à 6, selon lequel la composition de la matière fondue est ajustée de telle sorte que le rapport de concentration entre le molybdène et le chrome est inférieur à 1,0, de préférence inférieur à 0,8 et/ou
que les teneurs en chrome et en molybdène de la matière fondue en pourcentage en poids sont réglées sur les valeurs suivantes :

1,5 jusqu'à 1,9 pour le chrome
0,3 jusqu'à 0,9 pour le molybdène

8. Procédé selon l'une quelconque des revendications 1 à 7, selon lequel
1,8 jusqu'à 3,9 % en poids, de préférence 1,9 jusqu'à 2,9 % en poids sont ajoutés à la matière et dissous dans celle-ci.

9. Procédé selon l'une quelconque des revendications 1 à 8, selon lequel le vanadium est substitué partiellement par des éléments du groupe 5 de la classification périodique, à savoir le niobium et le tantale, dans une proportion inférieure à 0,6 % en poids et des carbures mixtes sont formés.

10. Procédé selon l'une quelconque des revendications 1 à 9, selon lequel le corps de coulée ou le cylindre est soumis à un traitement thermique qui comprend un réchauffement depuis la température ambiante jusqu'à une température de traitement de 400° C jusqu'à 500° C, de préférence 460° C jusqu'à 480° C, un maintien à cette température pendant moins deux heures, de préférence pendant au moins huit heures, et un refroidissement jusqu'à la température ambiante, éventuellement avec un traitement à une basse température.

11. Pièce coulée pour la partie de travail de cylindres indéfinis, à savoir de la partie de travail ou de la partie d'enveloppe de cylindres composites indéfinis, contenant les éléments suivants : carbone, silicium, manganèse, chrome, nickel, molybdène, en option aluminium, vanadium, éventuellement partiellement remplacé par du niobium et/ou du tantale, le reste étant constitué de fer, d'éléments d'accompagnement et d'impuretés résultant de l'élaboration, l'alliage comprenant plus de
0,5 jusqu'à 5,9 % en poids de vanadium, moins de 0,6 % en poids de vanadium pouvant être substitué par les éléments Nb, Ta
1,0 jusqu'à 2,0 % en poids de silicium
0,5 jusqu'à 2,0 % en poids de manganèse
1,0 jusqu'à 3,0 % en poids de chrome
3,5 jusqu'à 4,9 % en poids de nickel
0,20 jusqu'à 2,9 % en poids de molybdène
en option 0,002 jusqu'à 0,65 % en poids d'aluminium
2,0 jusqu'à 3,5 % en poids de carbone à la condition que les concentrations de carbone et de silicium soient ajustées en présence de nickel et de la somme efficace des éléments formant des carbures de telle sorte qu'on ait une microstructure dans l'état traité thermiquement avec
1,0 jusqu'à 3,0 % en volume de graphite sous forme de particules avec une dispersion supérieure à 20, mais inférieure à 100 particules par mm$^2$ de surface polie du matériau, 8 jusqu'à 35 % en volume de carbures eutectiques, au moins 1 % en volume de carbures de vanadium finement répartis, le reste étant constitué essentiellement de martensite.

12. Pièce coulée selon la revendication 11, l'alliage contenant
1,8 jusqu'à 4,9 % en poids de vanadium
2,2 jusqu'à 3,1 % en poids de carbone à la condition qu'on ait une microstructure dans l'état thermiquement traité avec

1,2 jusqu'à 2,5 % en volume de graphite sous forme de particules avec une répartition de plus de 22, mais au maximum 90 particules par mm$^2$ de surface polie du matériau

10 jusqu'à 25 % en volume de carbures eutectiques

2 jusqu'à 20 % en volume de vanadium ou de carbures mixtes de vanadium finement répartis

le reste étant constitué essentiellement de martensite.

**13.** Pièce coulée selon la revendication 11 ou 12, l'alliage contenant

2,0 jusqu'à 3,5 % en poids de carbone

1,0 jusqu'à 2,0 % en poids de silicium

0,5 jusqu'à 2,0 % en poids de manganèse

1,2 jusqu'à 2,5 % en poids de chrome

3,5 jusqu'à 4,9 % en poids de nickel

0,5 jusqu'à 2,1 % en poids de molybdène

1,5 jusqu'à 4,9 % en poids de vanadium

le reste étant constitué de fer et d'impuretés.

**14.** Pièce coulée selon l'une quelconque des revendications 11 à 13, l'alliage présentant un rapport de concentration entre le carbone et le silicium inférieur ou égal à 2,6, de préférence inférieur ou égal à 2,2 et/ou l'alliage contenant 2,6 jusqu'à 2,95 % en poids de carbone et/ou

l'alliage contenant 1,2 jusqu'à 1,85 % en poids, de préférence 1,4 jusqu'à 1,75 % de silicium et/ou

l'alliage contenant 0,005 jusqu'à 0,04 % en poids d'aluminium et/ou

l'alliage contenant 3,5 jusqu'à 4,9 % en poids de nickel, de préférence 4,15 jusqu'à 4,6 %.

**15.** Pièce coulée selon l'une quelconque des revendications 11 à 14, l'alliage présentant un rapport de concentration entre le molybdène et le chrome inférieur à 1,0, de préférence inférieure à 0,8 et/ou

l'alliage contenant

1,5 jusqu'à 2,01 % en poids de chrome

0,3 jusqu'à 0,9 % en poids de molybdène et/ou

l'alliage contenant 1,8 jusqu'à 3,9 % en poids de vanadium, de préférence 1,9 jusqu'à 2,95 %.

**16.** Pièce coulée selon l'une quelconque des revendications 1 à 15, le matériau présentant

8 jusqu'à 35 % en volume de carbures eutectiques et

1 jusqu'à 15 % en volume de carbures des éléments du groupe 5 de la classification périodique, à savoir du vanadium et du tantale, le reste étant constitué principalement de martensite, et/ou le matériau contenant 10 à 25 % en volume de carbures eutectiques et de 2 à 10 % en volume de carbures des éléments du groupe 5 de la classification périodique, le reste étant constitué essentiellement de martensite.

**17.** Cylindre indéfini composite, en particulier pour des cages finisseuses de trains à larges bandes et d'installations steckel et pour tôles fortes, fabriqué de préférence selon un procédé selon les revendications 1 à 10, comprenant une partie de travail ou une partie d'enveloppe constituée d'un alliage de coulée, de préférence selon les revendications 11 à 16, avec une faible tendance à l'adhérence ou à la soudure pour la matière laminée et une partie centrale dure en fonte nodulaire, la partie de travail ou l'enveloppe présentant une épaisseur de 10 jusqu'à 150 mm et le matériau d'enveloppe présentant une structure constituée essentiellement de 1,0 jusqu'à 2,5 % de volume de graphite, celui-ci étant présent sous une forme finement dispersée avec un nombre de particules de graphite supérieur à 20 par mm$^2$ de surface polie métallographique, de 8 jusqu'à 35 % en volume de carbures eutectiques, de 1 jusqu'à 20 % en volume de carbures de vanadium dans une répartition régulière, le reste étant constitué essentiellement de martensite et de composants présents en raison des impuretés ou de l'élaboration et ayant une dureté comprise entre 70 et 90 ShC.

**18.** Cylindre indéfini composite selon la revendication 17, la partie de travail ou le matériau d'enveloppe présentant une structure qui contient 1,0 jusqu'à 2,5 % en volume de graphite à la condition que sa densité de répartition soit au moins de 22 particules, mais au plus de 100 particules par mm$^2$ de surface polie métallographique, contienne des carbures eutectiques dans une proportion de 10 à 25 % en volume et présente 2 à 10 % en volume de carbures spéciaux des éléments du groupe 5 de la classification périodique.

**19.** Cylindre indéfini composite selon la revendication 17 ou 18, le matériau de travail ou d'enveloppe présentant une composition en % en poids du type suivant.

C :     2,0 jusqu'à 3,5
Si:     1,0 jusqu'à 2,0
Mn :    0,5 jusqu'à 2,0
Cr :    1,0 jusqu'à 3,0
Ni:     3,5 jusqu'à 4,9
Mo :    0,20 jusqu'à 2,9
Al :    0,002 jusqu'à 0,65
V :     0,5 jusqu'à 5,9, moins de 0,6 % en poids pouvant être remplacé par du niobium ou du tantale,

le reste étant constitué de fer et d'impuretés et le noyau du cylindre étant formé de fonte nodulaire ou bien le matériau de travail ou d'enveloppe présentant une composition, pour laquelle un élément ou plusieurs éléments présentent la concentration suivante en pourcentage en poids

C :     2,21 jusqu'à 3,1 ou 2,6 jusqu'à 2,95
Si :    plus de 1,2 jusqu'à 1,85 ou 1,4 jusqu'à 1,75
Mn :    0,6 jusqu'à 1,6 ou 0,7 jusqu'à 1,4
Cr :    1,5 jusqu'à 2,01
Ni :    3,5 jusqu'à 4,7 ou 4,15 jusqu'à 4,6
Mo :    0,3 jusqu'à 0,9
Al :    0,005 jusqu'à 0,1 ou 0,005 jusqu'à 0,04
V :     1,8 jusqu'à 3,9 ou 1,9 jusqu'à 2,9

le reste étant constitué de fer et d'impuretés et le noyau du cylindre étant formé de fonte nodulaire.

**20.** Cylindre indéfini composite selon l'une quelconque des revendications 17 à 19, le matériau de travail ou d'enveloppe présentant la composition suivante en pourcentage en poids :

V : 3,1 jusqu'à 3,9, de préférence 3,3 jusqu'à 4,75
Nb + Ta : moins de 0,6

le reste étant constitué de fer et d'impuretés.

**21.** Cylindre indéfini composite selon l'une quelconque des revendications 17 à 20, la zone de liaison entre l'enveloppe ou la partie de travail et le centre du cylindre constitué de fonte faiblement alliée ou de fonte nodulaire présentant dans une direction radiale une résistance à la flexion (essai de flexion en trois points) supérieure à 600 N/mm$^2$.

Fig. 1

Fig. 2

20

*Fig . 3*

50 ×

*Fig . 4*